# EUROPEAN PATENT SPECIFICATION

(11) **EP 0 548 389 B1**
(45) Date of publication and mention of the grant of the patent: **06.08.1997**
(21) Application number: 91122021.8
(22) Date of filing: 20.12.1991
(51) Int. Cl.: F24D 3/02

(54) **Hydronic heating water temperature control system**
Heizwassertemperaturregelung für eine Heizungsanlage
Contrôle de la température d'eau chaude pour une installation de chauffage

(43) Date of publication of application: 30.06.1993
(73) Proprietor: Fiedrich, Joachim, Carlisle, Massachusetts 01741 (US)
(72) Inventor: Fiedrich, Joachim, Carlisle, Massachusetts 01741 (US)
(74) Representative: Busse & Busse Patentanwälte

(56) References cited:
- EP-A- 0 200 128
- CH-A- 387 905
- DE-B- 2 810 775
- US-A- 2 211 573
- US-A- 2 404 597

## Description

The invention described herein relates to hydronic heating systems for dwellings, offices, etc. and more particularly to such a system as claimed in the pre-charactesing portion of claim 1.

Hydronic heating systems for heating the rooms in a dwelling, office, etc, are used widely in Europe and to a lesser extent in the United States. Water heated in a boiler is distributed to heating loops of tubing in the dwelling that carry the heat by radiation, conduction and convection to the rooms in the dwelling. A common technique provides a boiler hot water supply feeding the supply header of the heating loops and the boiler water return to which the return header of the heating loops connects. The return water is heated in the boiler and sent out again as hot supply water, and so the water is cycled through the essentially closed system. One or more water pumps in this system keep the water flowing and valves control water flow rates through the loops depending on demand.

A heating loop may include several heating elements like wall mounted radiators and/or baseboard finned tubing that are the principal heat exchangers of the loop, or the tubing itself may be the principal heat exchanger of the loop. In the latter case the tubing is usually buried in the floor of a room and the tubing heats the floor. Often the tubing is buried in a special concrete and so heat exchange is principally by conduction and radiation to the concrete, which in turn heats the room by some conduction and convection, but principally by radiation. Hence, this type of heating is called Radiant Floor Heating (RFH). Similarly, the tubing is sometimes mounted in a wall against the material or panels that form the exposed surface of the wall and this type of heating is called Radiant Wall Heating (RWH).

In such RFH and RWA systems and other hydronic heating systems using wall radiators and/or baseboard finned tubing elements, the supply water temperature from the boiler must be controlled so that it does not exceed certain limits that are substantially lower than the usual boiler supply water temperature. There are several reasons for this: first, the temperature of radiator elements on the wall must not be so high that they are not safe to touch; second, for RFH and RWH the temperature of the floor or the wall must not be uncomfortable hot; and third, where the tubing is plastic, the water temperature for some plastic materials must not exceed about 60°C (140 °F). Good quality "cross-linked" polyethylene tubing, on the other hand, can carry water at temperature in excess of 60°C (140°F) without any deterioration of the tubing or the tubing oxygen barrier.

The heating loop supply water temperature could be maintained low and so avoid these problems by simply operating the boiler at a lower water temperature. However, that can cause flue gas condensation on the boiler water heat exchanger. For example, the flue gas due point can be as high as 60°C (140 °F) and so to avoid flue gas condensation it is preferred that the boiler supply water temperature be not less than 60°C (140 °F).

In hydronic heating systems subject to such water temperature limitations, where the boiler is powered by burning fossil fuels, the boiler water supply temperature is usually well above 60°C (140°F) and often at about 87,8°C (190F) to 93,3°C (200°F) and so the boiler supply temperature must be stepped down before it is fed to the heating loops. In the past, a three-way, electrically controlled, motorized mixing valve has been used in the boiler supply line (US-A-2,404,597) that feeds the supply header for the heating loops, between the boiler supply and the heating loops supply header. This mixing valve has two inputs and one output. One input is directly from the boiler hot water supply, the other input is from the return header of the heating loops and the output is directly to the supply header of the heating loops. The mixing valve motor is electrically energized by remote reset controls that sometimes respond to outside ambient temperature, inside room temperature, boiler water temperature, supply header water temperature, etc. In operation, the mixing valve mixes some return water with the hot supply water to reduce the temperature of the supply water that is fed to the supply header of the heating loops. Such prior systems perform quite satisfactorily, but they are relatively expensive, require remote transducers and electric power to the valve's motor and relatively greater skill to install and adjust for efficient operation.

In an effort to reduce expense, non-motorized mixing valves have been used in the boiler supply line. These have the disadvantage of providing less comfort and lower long term fuel economy. However, for the small installation (kitchen-bath additions, etc. to a dwelling), where it is difficult to justify the cost of a more sophisticated motorized valve and its controls, these systems are sometimes used. They usually have a remote electrically operated room thermostat controlling a circulator wired through a surface aquastat to prevent overheated water from entering the heating loops; and on the boiler supply line is a dial thermometer that indicates the supply water temperature into the loop supply header. However, manually setting the water temperature into the heating loops by adjusting the valve setting is not precise. Often within a few hours after start-up, when temperatures throughout the system have stabilized, fluctuations of the boiler supply water temperature, or varying load conditions at other parts of the system will cause excessive fluctuations of water temperature delivered by the valve to the heating loops supply header. These systems have no feedback control to the mixing valve that is derived from the heating loop supply header water temperature.

From US-A-2 211 573 a hydronic system of the kind referred to in the pre-characterizing portion of claim 1 is known having a modulating means which is normally responsive to a room thermostat. The arrangement is such that falling of the room temperature leads to increasing of the proportion of the water circulated through a boiler and decreasing the proportion of water by-passed the boiler and directly fed to the supply line. Thus the temperature of the water being supplied to heating loops will be increased, whereby the room temperature will rise back to its predetermined value and the system will again assume a state of equilibrium. In the event of heavy heating load upon the system a large proportion of water will be circulated through the boiler. This will result in the boiler water temperature falling appreciably under a predetermined temperature value. To prevent the boiler water temperature from falling below a predetermined minimum value the known system comprises a boiler thermostat which operates controlling means causing the modulating means to reduce the proportion of water circulated through the boiler, and which governs the circulating pump so that operation of said pump will be turned off when the complete return water is by-passed to the supply line.

A thermostat is defined as a device for controlling a heating or cooling system that responds to temperature by expanding and contracting and has an actuator. Thus part of any thermostat (the part that expands and contracts) is mechanical and the rest of it may be mechanical and/or electrical or totally electrical. For the descriptions herein, an electric thermostat uses electric power to energize the thermostat actuator, whereas a non-electric thermostat does not use electric energy to energize the actuator.

It is an object of the invention herein to provide a hydronic heating system that is relatively less expensive than prior systems of equivalent capacity and which avoids some of the limitations and disadvantages of the prior systems, particularly the feeding excessively high temperature boiler supply water to the system heating loops.

The invention is a hydronic heating system as claimed in claim 1.

The diverting valve diverts some of the cooler return water to the hot supply water to reduce the temperature of the supply water feeding the heating loop supply header. Thus, the supply water is diluted with return water, lowering the temperature of the supply water directly from the boiler. The diverting valve is a modulated valve and the temperature of the supply water flowing to the supply header is detected and used as a feedback control signal to modulate the valve.

The use of a diverting valve in the return line with the feedback control affords a technique of "Set Point Control". The three-way diverting valve in the return line with its control including temperature feedback from the heating loops supply header (per se known from CH-A- 387 905) provides automatic water tempering, insuring constant supply water temperature to the heating loops. It may be relatively inexpensive and reliable and can be the primary entry-level controller in a hydronic heating system in a dwelling, office, etc.. High quality three-way modulated diverting valves are available from a number of sources.

The feedback control (set point control) of the diverting valve can be provided by remote electric transducers and an electric control head having a motor or solenoid driving (modulating) the diverting valve. Feedback control can also be provided by a non-electric thermostat control head on the valve, controlled by a capillary temperature sensor. In both cases, the feedback control derived from the temperature of the diluted (tempered) supply water that is fed to the heating loops header is the primary valve modulation control.

Where the non-electric thermostat control head is used, the feedback control is entirely mechanical. The bulb of the capillary sensor can be inserted directly into the diluted supply water line or into the heating loops supply header, or it may be clamped to the supply line next to the supply header in intimate thermal contact therewith, so that it is at the temperature of the diluted supply water flowing into the supply header. In operation, capillary fluid in the bulb expands with temperature applying a pressure force through the capillary to the actuator head and so the diverting valve is modulated to increase or decrease the flow of return water to the supply header as necessary to maintain the water temperature at a predetermined value. That predetermined value can be set by a mechanical bias setting on the control head. This set point control configuration insures that an accurate reading of the supply header water temperature is made continuously; and simultaneously, any deviation from the setting is immediately nulled by modulating the valve

This use of a non-electric modulated setpoint valve operates rapidly and accurately and is an appropriate choice for a small installation or a zone addition to an existing system.

The three-way diverting valve used as described above with an electric or a non-electric control head has one input and two outputs; the through output is to the return line to the boiler; the diverted output is to the boiler supply line; it has a spring loaded valve stem that carries two plugs, one to close the through output and the other to close the diverted output; and a spring that urges the stem to move in the direction that closes the diverted output and opens the through output. Thus, in view of the intrinsic operation of any control head, whether it is electric, thermostatic or otherwise, the control head piston engages the valve stem only to push the stem in and so increase diverted water flow when the thermostat control head setting calls for less heat or a lower temperature of the heating loop header water temperature. If the head is set too high, or does not work, or is removed from the valve, the diverted output of the valve closes and the supply water to the heating loops is not diluted and may be too hot for comfort of cause other undesirable effects described herein.

As mentioned above, any type of electric or non-electric (totally mechanical) control head attached to the diverting valve as described herein, is such that the control head piston engages the valve stem only to push the stem in and so increase diverted water flow when the control head setting (set electrically or mechanically) calls for less heat or a lower temperature of supply water to the supply header than the actual temperature of supply water to the supply header (actual heat). The actual temperature of supply water to the supply header is referred to herein as the control water temperature and if that temperature is below what the head setting calls for, the head piston does not engage the valve stem at all and so the valve spring moves the stem to close the diverted output and open the through output.

Thus, this valve control actuation produces: maximum flow of diverted return water to the supply line when the control water temperature is substantially greater than the control head setting; a variable modulated flow of diverted return water to the supply line when the control water temperature and the control head setting are about the same (equivalent); and zero diverted water flow when the control water temperature is substantially less than the control head setting. Here, even when the head is functioning properly, a situation can arise when there is no diverted water flow, and so the header for the heating loops is fed undiluted boiler supply water, which is often too hot for efficient delivery of heat and too hot for comfort. As mentioned above, the same problem arises if the control head is removed from the valve, in which case the valve spring also completely closes the diverted water output and the header for the heating loops is fed undiluted boiler supply water making: radiator elements on the wall too hot to touch; RFH floor and RWH wall temperatures uncomfortable hot; and in heating loops using plastic tubing, the water temperature would be in excess of the recommended temperature and could cause deterioration of the tubing or the tubing oxygen barrier.

To avoid feeding excessively high temperature boiler supply water to the system heating loops and yet avoid operating the boiler at a water temperature that is likely to cause flue gas condensation in the boiler, a mechanism in the valve insures that the diverted output of the valve cannot be less than a determinable part of the total flow through the valve. Having determined that minimum part and set the installed mechanism accordingly, the supply water temperature in the header feeding the heating loops is limited and so will not be too hot for efficient delivery of heat or too hot for comfort, regardless of the action of the control head, or even if the control head is removed from the valve. In other words, this mechanism insures that the temperature of the water flowing to the header for the heating loops is always less than the boiler supply water temperature. Other details and advantages of the invention will be apparent from the following description of preferred embodiments as illustrated in the drawings. The reasons for limiting the temperature are several and depend upon the kind of tubing and/or heat exchanger elements that are used in the system heating loops. As mentioned above, some elements are exposed to the occupants of the dwelling and so they must not be so hot that they are not safe to touch. Where RFH or RWH is used, the floor or wall temperature must not be uncomfortable hot, and where plastic tubing is used the water temperature must be limited so as not to cause early failure of the tubing. Hence, the temperature of the supply water fed to the heating loops is controlled in view of the kind of materials used and in view of the kind of elements used in the heating loops. In a given installation, there may be more than one different kind of element and more than one different kind of material used in the heating loops, all fed from the same boiler. For this reason the improvements of the present invention enable ready, reliable, in situs adjustment to insure that supply water temperature does not exceed the limitations of the elements and/or comfort.
Figure 1 is a schematic diagram of the distribution station of a hydronic heating system with a three-way modulated diverting valve in the return line, modulated by a non-electric thermostat control head in response to diluted supply water temperature, the diverting valve being adapted with a high temperature limit stop;
Figure 2 is a front or elevation view of the piping configuration of the distribution station of the hydronic heating system with a three-way modulated diverting valve in the return line, shown in the diagram of Figure 1;
Figure 3 is a schematic diagram of a hydronic heating system including the distribution station configuration of Figure 1 with two sets of heating loop headers in series.
Figure 4 is a schematic diagram of a hydronic heating system including the distribution station configuration of Figure 1 with two sets of heating loop headers in parallel.
Figure 5 is a schematic diagram of a hydronic heating system including two independently operating distribution station configuration, like Figure 1, fed by the boiler.
Figure 6 is a cross section view of a typical three-way modulated diverting valve with a control head attached that may be a non-electric thermostat control head or an electric control head and is adapted with a high temperature limit stop and showing, as an example, the valve position equivalent to the position shown in Figure 9;
Figure 7 is a schematic diagram of a hydronic heating system with a diverting valve in the return line of the system, the diverting valve having a high temperature limit stop according to the invention and a conventional electric control head on the valve that is responsive to diluted supply water temperature;
Figures 8, 9 and 10 are cross-section diagrams of the diverting valve and control head to show operation of the valve of Figure 6, with and without the high temperature limit stop adapting mechanism of the invention;
Figure 11 is an enlarged view of part of the diverting valve showing the adaptation of the valve with a high temperature limit stop; and
Figures 12 and 13 show exploded views of the diverting valve and the high temperature limit stop parts and a tool for removing the valve conventional dust cap and installing and adjusting the high temperature limit stop, thereby adapting the diverting valve according to the invention.

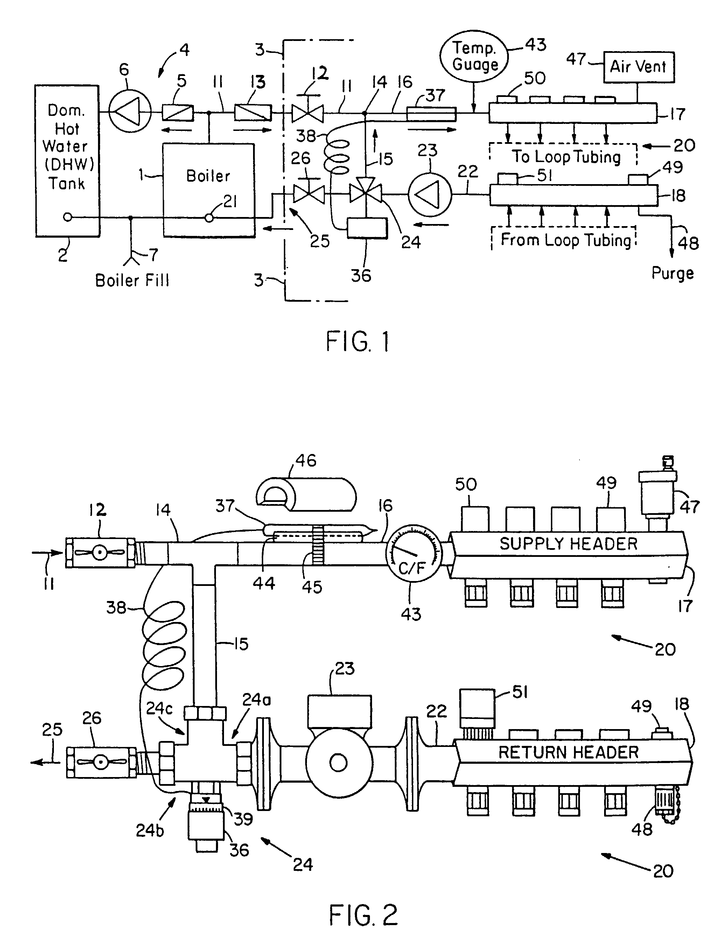

Turning first to Figures 1 and 2, Figure 2 is a schematic diagram of a typical hydronic heating system installed in a dwelling incorporating the present invention and Figure 1 is a detailed elevation view of the distribution station of the hydronic system. The system includes a boiler 1 that supplies the hydronic distribution station 3 and also supplies the dwelling domestic hot water (DHW) tank 2. The usual requirement of the system is to provide DHW water as hot as 82,2°C (180°F), which can be required for washing machines and dish washers. The same boiler supply also feeds the hydronic heating system 3. As shown in Figures 1 and 2, the hydronic heating system distribution station 3 includes four heating loops 20, of which one or more require that the supply water temperature be substantially lower than 82,2°C (180°F) and so for those loops, return water is diverted to the loop supply, diluting the loop supply and so reducing the temperature (tempering) the loop supply water to within the required limits.

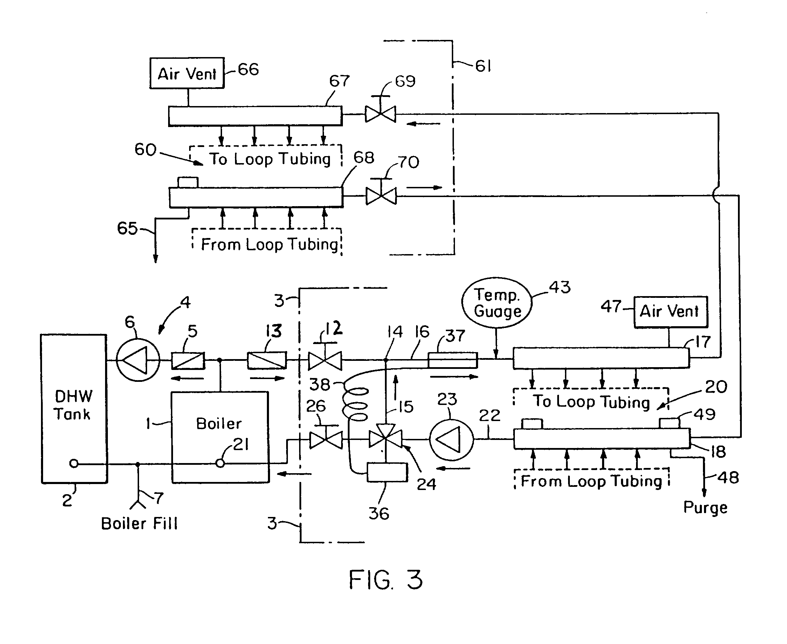

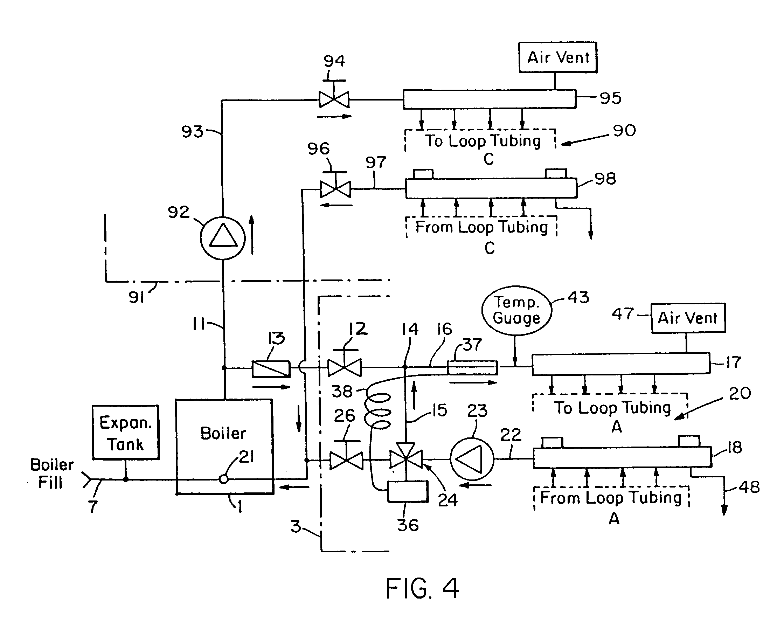

Other system configurations of heating loops for which return water is diverted to the supply are shown in Figures 3, 5 and 10. On the other hand, where the hydronic heating system includes some loops that preferably operate at high supply water temperature (82,2°C (180°F) or greater) and some that must operate at lower temperature, supply water to the low temperature loops is controlled by diverting the cooler return water to the supply to dilute the supply, while the high temperature loops receive undiluted supply water directly from the boiler. Such a combination system is illustrated in Figure 4.

Turning again to Figures 1 and 2, Figure 1 shows details of the distribution station 3 incorporating a three-way modulated diverting valve in the return line. The boiler supply line 11 to the station includes a unidirectional check valve 12, an isolation ball valve 13, a T connection 14 to diverting line 15 and the continuation 16 of supply line 11 to heating loop supply header 17 that feeds the several (four) heating loops 20. A separate loop tubing connection to the supply header 17 is provided for each loop. At the other end of each loop a similar tubing connection is provided to the return header 18. The return line from header 18 to the boiler return reservoir 21 includes a first section 22 to water pump 23, three-way modulated diverting valve 24, boiler return line 25 and isolation ball valve 26 in the return line.

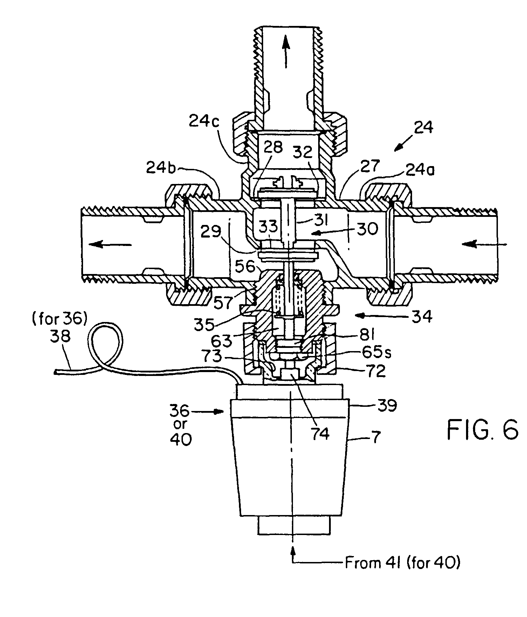

Three-way modulated diverting valve 24 has one water flow input 24a from pump 23, receiving return water from the heating loops, a first water flow output 24b to the boiler return line 25 and a second water flow output 24c to diverting line 15 that connects to the supply line T connection 14. A suitable structure of diverting valve 24 is shown in Figure 6. The valve includes a housing 27 defining the input and two outputs, a diverting flow seat 28 and a return flow seat 29. The valve spindle assembly 30 includes the stem 31, carrying the diverting flow disc 32 and the return flow disc 33 adapted to close against the seats 28 and 29, respectively. The stem is carried by the stem gland assembly 34 that fits tightly to the housing and is sealed thereto, the stem being slideably carried by the gland assembly and the stem is spring loaded by coil spring 35 which urges the stem to move in a direction that closes the diverting water passage 24c and opens the return water passage 24b.

Modulation of valve 24 is accomplished by moving the stem 31 against spring 35 and is done by delivering a force to the stem to overcome the spring resistance. A non-electric structure for delivering this modulating force to the valve stem is also shown in Figures 2 and 6. It is a non-electric, thermostatic, automatic controller for the valve including an actuating control head 36 , a thermal sensor bulb 37 and a capillary line 38 from the sensor bulb to the head. The sensor bulb and capillary contain a fluid that expands as the fluid temperature increases, delivering an increased pressure force via the capillary to the head, which converts the fluid pressure to a mechanical force against the stem at the end 75 thereof. Thus, when the temperature of the fluid in the sensor bulb increases, the force on the stem increases, increasing the diverted water flow. In this way, the temperature of the diluted supply water flowing to the loops supply header 17 is effective as a non-electric feedback control signal to modulate the valve.

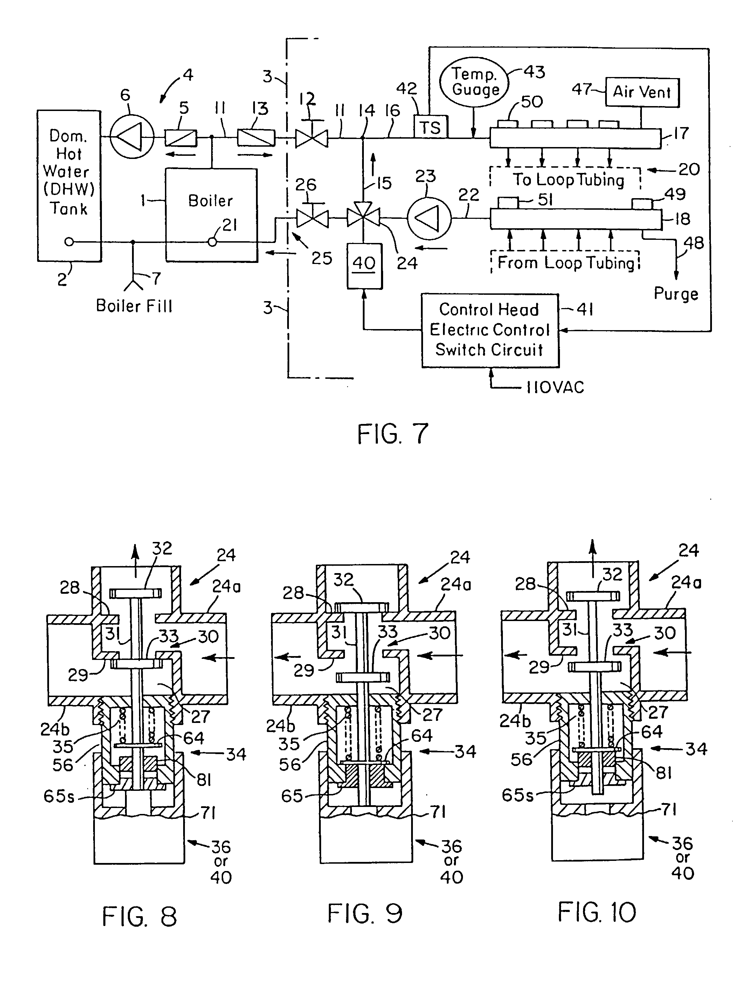

An electric thermostat controller can control the diverting valve 24 in mush the same way. Figure 7 is a schematic diagram of the same hydronic heating system as shown in Figure 1 and in which the valve 24 control head 40 contains an electric actuator that is energized by an electric signal from electric control switch circuit 41. This is described more fully hereinbelow.

Sensor bulb 37 is preferably located so as to detect the temperature of the supply water flow into header 17 that feeds the heating loops. This can be done using a structure (not shown) for inserting the bulb into the supply water line 16 or inserting the bulb into the supply header 17. It can also be done more simply by attaching the sensor bulb in intimate thermal contact with the outside of supply line 16 as shown in Figure 2. For this purpose, the elongated sensor bulb 37 is oriented longitudinally along line 16, partially enclosed by mounting block 44 that also partially encloses line 16 and is secured tightly thereto by strap 45. Block is made of highly thermally conductive material such as copper or aluminum, to insure that the temperature of the fluid in the bulb is substantially the same as the temperature of the tempered supply water flowing in line 16 immediately adjacent thereto. Also, this assembly may be covered with an insulating sleeve 46 to insure the equality of temperature. A visible temperature gauge 43 is also attached to line 16 close to header 17 in intimate thermal contact with the line so that it displays a temperature as near to the temperature of the tempered supply water as possible.

An initial adjustment of the system when operation first commences can be carried out as follows: (a) with supply water flowing to one or more of the heating loops, observe the temperature indication of temperature gauge 43; (b) if the temperature indicated by the gauge is too high, rotate manual adjusting ring 39 of controller head 36, decreasing the index number in line with the marker thereon, thereby increasing the force that the head exerts on the valve stem spring for the then prevailing bulb fluid pressure and so diverted return water flow via line 15 to supply line 16 is increased reducing the temperature of the water in the header; (c) on the other hand, if the temperature gauge 43 reads too low, rotate ring 39 to increase the indicated number and so less return water is diverted to the supply line and the temperature of the supply water flow to header 17 increases. These adjustments are made until the system operates steadily at the supply water temperature desired as indicated by temperature water gauge 43. At that point, the system is, in effect, calibrated for automatic feedback operation to deliver tempered (diluted) supply water to header 17 at the desired temperature even though various heating loops are turned on and off, depending upon demand, and the boiler supply water temperature fluctuates up and down, again, depending upon demand.

For added safety and ease of maintenance, the supply header 17 may be equipped with an air vent 47 and the return header may be equipped with a purge line 48 controlled by a manually operated valve 49. Supply water flow to each of heating loops may be controlled by a balancing valve with an internal position set screw. Such balancing valves for each loop are denoted 50. An alternate control for each loop could be an electrically operated power head like 51, each controlled by an electrical thermostat in the dwelling.

Figure 3 shows the same system as Figure 1 with an additional distribution station 61 in series with distribution station 3, providing supply and return headers for additional heating loops 60 and includes supply and return headers 67 and 68 that each may be equipped the same as headers 17 and 18, respectively. In operation the supply water at controlled temperature is fed to both of the supply headers 17 and 67, first into header 17 and then through isolation valve 69 into header 67 and so heating loops 20 and heating loops 60 are fed tempered supply water from the same control. Similarly, return water from heating loops 60 flows through valve 70 to return header 18 where it is combined with return water from loops 20 and on through pump 23 and diverting valve 24 to boiler return 21. This system is suitable where all of the heating loops 20 and 60 require supply water at the same temperature.

The system in Figure 4 also includes two distribution stations. Station 3 is the same as Station 3 in Figures 1 and 3 and supply water is tempered so that it does not exceed predetermined limits. The other station 91 does not include any tempering of supply water, but receives supply water directly from the boiler supply line 11 via pump 92 and supply line 93 of station 91. A supply line isolation valve 94 is provided in the line into supply header 95 and a return line isolation valve 96 is provided in the return line 97 from return header 98. The heating loops 90 extend between supply and return headers 95 and 98. The two distribution systems 3 and 91 receive boiler supply water at the temperature required for station 91 and the heating loops on that station are designed for operation at that temperature which may be 82,2°C (180°F) or higher. However, the distribution station 3, heating loops 20 require lower supply water temperature and so are equipped with the system that diverts return water into the supply header to maintain the lower supply water temperature. This system may or may not feed a DHW tank and so the boiler high water temperature may be limited by the limitations of heating loops 90.

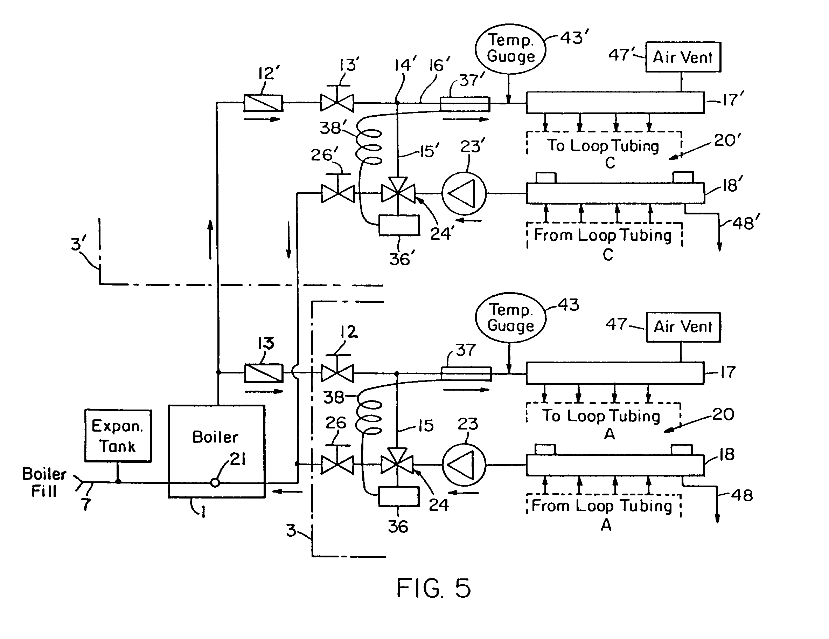

Figure 5 illustrates a system having two distribution stations each of which requires supply water temperature control, and the supply water temperature required for each station is different. Hence, in this system, the first distribution station 3 and the second distribution station 3' are essentially connected in parallel with the boiler supply and return and they are substantially identically equipped, although they are operated at different temperatures. Since the equipment at each of these stations is the same, they bear the same reference numbers, but in station 3' the reference numbers all include a prime. Here again, the boiler may or may not supply hot water to other systems in the premises.

Turning to Figures 1, 2 and 7, Figures 1 and 7 are schematic diagrams of a typical hydronic heating system installed in a dwelling having a diverting valve in the system return water line, that may incorporate a high temperature limit stop in the valve.

Control head 36 in Figure 1, with bulb 137 and capillary 138 is a non-electric thermostat control system for diverting valve 24. On the other hand in Figure 7, the control head 40 is electric and the thermostatic control system includes an elecric motor or actuator in the head that is energized by 24 VAC from head control switch circuit 41. One of the electric signal inputs to switch circuits 41 is from temperature sensor 42 that is attached to supply line 16 and so the temperature detected by the sensor is essentially the temperature of the diluted supply water flowing into the supply header 17.

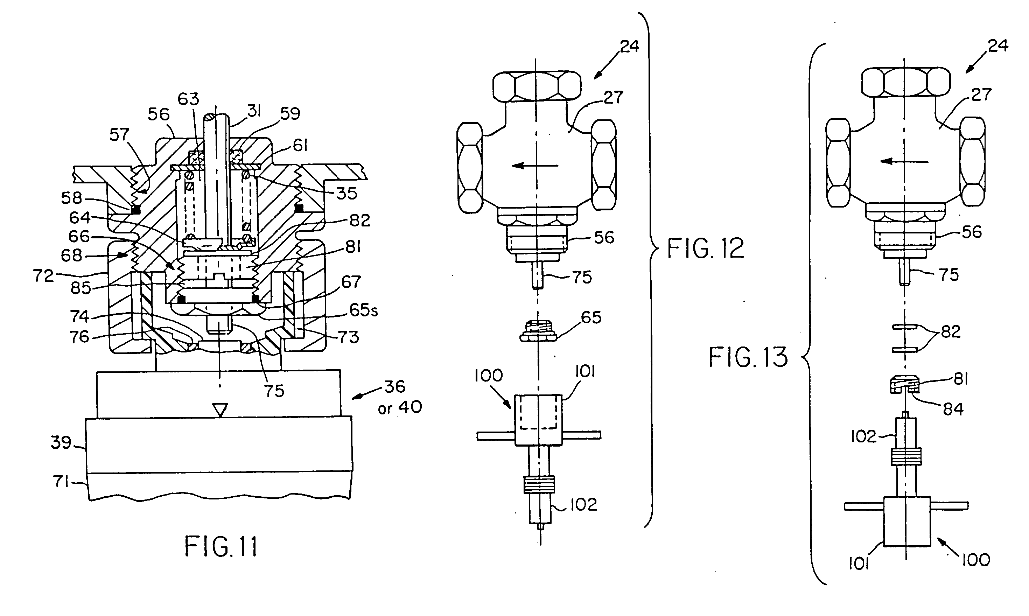

Diverting valve 24, as shown in Figures 6 and 11, has a gland assembly 34 that includes the gland housing 56 that screws into the valve housing 27 by threads 57 and the two housings are sealed against water pressure by O ring seal 58. The stem is slideably held by the gland assembly and sealed thereto by water tight seal 59 held in place by retainer ring 61. Spring 35 is held in housing 56 in space 63 and at one end bears against retainer ring 61 fixed to the housing and at the other end bears against the stem ring 64, which is fixed to the stem. The external open end of the gland housing is closed by hex head dust plug 65 that screws into the open end of the housing by threads 66 and may carry an O ring 67 sealing against the housing. In the conventional valve, hex head dust plug 65 screws tight to the gland housing and serves no other purpose than to slideably pass the stem to outside the valve and close the inside of the housing containing the spring against outside moisture and dirt. There is no water pressure in the space 63 inside the gland housing.

On the outside of the gland housing 56 are threads 68 for attaching the electric control head 40 or the non-electric thermostatic control head 36. As shown in Figure 6, either control head is attached by head holding nut 72 by screwing the nut onto threads 68. The nut is captured by the control head positioning boss 73 that abuts the gland housing when nut 72 is tightened to fix the position of the control head piston 74 relative to the end 75 of the stem that projects from plug 65 and the piston is guided by sleeve 76 centrally located in the boss 73.

Electric control head 40, shown in Figure 7, contains an electric motor or an electric actuator that is controlled energized by 24 VAC electric power from control switch circuit 41. It has a piston that drives into and out of the diverting valve 24 against the valve stem 31 and so positions (opens and closes) the valve. Suitable electric control heads for controlling such a three-way diverting valve are available in the market place. The electric head may look much like non-electric head 36 shown in Figure 6, except that it has an electric cable 41a from switch circuit 41 and, of course, no capillary. The electric control head 40 may contain a two position electric actuator, such as a solenoid, or a reversible electric motor and so may be fully modulating. The type used depends on the system control strategy.

The conventional diverting valve 24 equipped with a conventional electric control head 40 or non-electric thermostatic control head 36 in the system shown in Figures 7 and 1, respectively, is adapted to provide an adjustable stop for the coil spring 35 in the gland assembly 34 so that the spring cannot move the valve position in the direction that closes the diverting output and opens the return output any more than shown by Figure 9, while permitting the extreme position of fully open diverting output and fully closed return output shown in Figure 8. Thus, the mechanism insures that the valve cannot be positioned at any position between the position shown in Figure 9 and the position shown in Figure 10, where the diverting output is closed. By adapting the conventional diverting valve in this way, it is assured that the temperature of the mixed water flowing to the header for the heating loops is always less than the boiler supply water temperature.

This is done in the present invention by removing the conventional gland assembly dust plug 65 that serves only to provide a mechanical guide for the stem 31 emerging from the gland assembly and seal the spring space 63 therein against outside moisture and dirt. As shown in Figure 11, the conventional gland assembly dust plug 65 is removed and replaced by a headless stop plug 81 that is screwed into housing plug threads 66 to a depth that positions a spacer ring 82 at the end 83 of the stop plug and is adapted to contact the spring-stem engaging ring 64 so that the spring extension is limited by stop plug 81 and that limit position is adjustable by turning the stop plug driving slot 84 to screw the plug in or out. Then dust plug 65 is screwed into threads 66 to provide again a mechanical guide for stem 31 and seal the spring space against dirt and moisture. For this purpose, the usual dust plug for the valve can be shortened so that there is a space 85 between the dust plug and the stop plug.

Figure 12 shows the conventional diverting valve 24 without a control head attached, the extending end 75 of the stem projecting from the gland housing 56 and the conventional gland housing dust plug 65 removed. It is removed using the socket 101 of tool 100 that fits the dust plug hex head 65h. Then one or more spacers 86 are inserted onto the protruding end 75 of the stem and as shown in Figure 10 headless stop plug 81 is screwed into the housing using the screw driver end 102 of tool 100 that fits the plug slot 84. In this process, when the spacers 82 at the end of the plug meet spring retainer 63 there is resistance to further screwing the plug into the housing. When that resistance is felt, the installer then continues to screw stop plug 81, using tool 100, a predetermined number of turns so that the valve is positioned to divert a predetermined portion of the total flow through the valve to the system supply line. That position is represented by Figure 9.

The adaptation of the diverting valve according of the hydronic heating system to the present invention is completed by screwing in the shortened dust plug 65s to provide a mechanical guide for the valve stem and seal the spring space against outside dirt and moisture. This is done using socket 101 of tool 100 that fits the shortened dust plug hex head.

## Claims

1. A hydronic heating system having a source (1) of hot supply water and a reservoir (21) of cooler return water, a supply water line (11) from said source (1), a return water line (22,25) to said reservoir (21), at least one heating loop (20) through which water flows from said supply line (11) to said return line (22,25), said heating loop (20) requiring water at a temperature that is substantially lower than the temperature of said supply water in said line (11) from said source (1), means for diverting water flow from said return line (22) to said supply line (11) whereby said supply water to said heating loop (20) is diluted with said return water reducing the temperature thereof, said diverting means being a valve (24) having a water input (24a) from said return water line (22), a first water flow output (24b) to said reservoir (21), a second water flow output (24c) to said supply water line (11) and modulating means (36;40) for modulating the output water flow between said first and second water flow outputs (24b,24c), characterized in that said modulating means (36;40) is responsive to the temperature of said diluted supply water and modulates the output water flow between said first and second water flow outputs (24b;24c) so that the temperature of said diluted water does not exceed a predetermined water temperature value, said diverting valve (24) having a stem (31) that positions said valve, a spring (35) that urges said stem (31) toward the valve position of less diverted water flow, and means (81) for limiting the movement of said valve stem (31) in said direction toward the valve position of less diverted water flow, whereby said valve stem (31) cannot be positioned for no diverted water flow.

2. A hydronic heating system as in claim 1 wherein
(a) said means responsive to the temperature of said diluted supply water for controlling said valve modulating means (36) is a thermostatic controller (36) having a capillary temperature sensor (37) and a thermostatic actuator (36),
(b) said capillary temperature sensor (37) is attached to said supply water line (11) that carries diluted supply water, and
(c) said thermostatic actuator (36) controls said valve modulating means (31,32,33,34,35).

3. A hydronic heating system as in claim 1 or 2 wherein
(a) said valve spring (35) is contained in a housing (56),
(b) there is an opening in said housing (56;127) providing access to said spring (35) and
(c) said means for limiting the movement of said valve stem (31) in said direction toward the valve position of less diverted water flow includes a stop plug (81) that fits into said opening in said housing, providing a mechanical block (82) that limits the movement of said valve stem (31) in said direction toward the valve position of less diverted water flow.

4. A hydronic heating system as in claim 3 wherein said mechanical block is a projection (82) of said stop plug (81).

5. A hydronic heating system as in claim 3 wherein said mechanical block includes spacers (86) inserted in said opening before said stop plug (81).

6. A hydronic heating system as in one of claims 3-5 wherein said opening in said housing (56;127) is threaded, said stop plug (81) has matching threads and said stop plug (81) is screwed into said opening.

7. A hydronic heating system as in one of claims 3-6 wherein said stop plug (81) is headless so that it can be screwed into said threaded opening leaving opening threads (66) to accommodate screwing a dust plug (65) into said opening on top of said headless stop plug (81).

8. A hydronic heating system as in claim 7 wherein said dust plug (65) is shortened to provide a space (85) between the dust plug (65) and the stop plug (81).

9. A hydronic heating system as in one of claims 3-8 wherein
said thermostatic valve controller includes a bulb temperature sensor (37;138) detecting said diluted supply water temperature, a thermostatic control head (36;137) attached to said valve (24;124) and a capillary tube (38;139) from said bulb to said control head.

## Patentansprüche

1. Wasserheizungssystemn mit einer Quelle (1) mit heißen Vorlaufwassers und einem Vorratsbehälter (21) mit kühlerem Rücklaufwasser, einer von der Heißwasserquelle (1) ausgehenden Vorlaufwasserleitung (11), einer zum Vorratsbehälter (21) führenden Rücklaufwasserleitung (22,25), zumindest einer Heizschleife (20), durch die Wasser von der Vorlaufleitung (11) zu der Rücklaufleitung (22,25) strömt, wobei die Heizschleife (20) Wasser mit einer Temperatur erfordert, die wesentlich niedriger ist als die Temperatur des Vorlaufwasser in der von der Heizwasserquelle ausgehenden Leitung (11) ist, und mit einem Mittel zum Aufteilen der Wasserströmung von der Rücklaufleitung (22) zu der Vorlaufleitung (11), wobei das Vorlaufwasser zu der Heizschleife (20) zu seiner Temperaturminderung mit Rücklaufwasser vermischt wird und wobei das Aufteilungsmittel ein Ventil (24) mit einem Wassereingang (24a) aus der Rücklaufwasserleitung (22), einem ersten Wasserströmungsausgang (24b) zu dem Vorratsbehälter (21) und einem zweiten Wasserströmungsausgang (24c) zu der Vorlaufwasserleitung (11) sowie ein Veränderungsmittel (36;40) zur Veränderung der Auslaßwasserströmung zwischen dem ersten und dem zweiten Wasserströmungsausgang (24b,24c) umfaßt, **dadurch gekennzeichnet**, daß das Veränderungsmittel (36;40) auf die Temperatur des verschmischten Vorlaufwassers anspricht und die Auslaßwasserströmung zwischen dem ersten und dem zweiten Wasserströmungsausgang derart verändert, daß die Temperatur des vermischten Wassers einen vorbestimmten Wassertemperaturwert nicht überschreitet, das Aufteilungsventil (25) einen das Ventil positionierenden Stößel und eine Feder (35), die den Stößel (31) in Richtung einer Ventilstellung für weniger aufgeteilte Wasserströmung aufweist, und ein Mittel (81) für eine Begrenzung der Bewegung des Ventilstößels (31) in die Richtung auf eine Ventilstellung für weniger aufgeteilte Wasserströmung vorgesehen ist, wodurch der Ventilstößel (31) keine Stellung für unaufgeteilte Wasserströmung einnehmen kann.

2. Wasserheizungssystem nach Anspruch 1, bei dem
(a) das auf die Temperatur des vermischten Vorlaufwassers ansprechende Mittel zur Steuerung des Ventilveränderungsmittels (36) von einem thermostatischen Regler (36) gebildet ist, der einen kapillaren Temperaturfühler (37) und einen thermostatischen Geber (36) aufweist,
(b) der kapillarische Temperaturfühler (37) an die vermischtes Vorlaufwasser führende Vorlaufwasserleitung (11) angeschlossen ist, und
c) der thermostatische Geber (36) das Ventilveränderungsmittel (31,32,33,34,35) steuert.

3. Wasserheizungssystem nach Anspruch 1 oder 2, bei dem
a) die Ventilfeder (35) in einem Gehäuse (56) untergebracht ist,
b) in dem Gehäuse (56;127) eine Öffnung vorgesehen ist, die einen Zugang zu der Feder (35) bildet, und
c) das Mittel zur Begrenzung des Ventilstößels (31) in Richtung auf eine Ventilstellung für eine geringer aufgeteilte Wasserströmung einen Anschlageinsatz (81) aufweist, der in die Gehäuseöffnung eingreift und einen mechanischen Anschlag (82) bildet, der die Bewegung des Ventilstößels (31) in Richtung der Ventilposition mit weniger aufgeteilter Wasserströmung begrenzt.

4. Wasserheizungssystem nach Anspruch 3, bei dem der mechanische Anschlag ein Fortsatz (82) des Anschlageinsatzes (81) ist.

5. Wasserheizungssystem nach Anspruch 3, bei dem der mechanische Anschlag Distanzglieder (86) aufweist, die vor dem Anschlageinsatz (81) in die Öffnung eingesetzt sind.

6. Wasserheizungssystem nach einem der Ansprüche 3 bis 5, bei dem die Öffnung in dem Gehäuse (56;127) mit Gewinde versehen ist, der Anschlageinsatz (81) ein dazu passendes Gewinde aufweist und der Einsatz (81) in die Öffnung eingeschraubt ist.

7. Wasserheizungssystem nach einem der Ansprüche 3 bis 6, bei dem der Anschlageinsatz (81) ohne Kopf ausgeführt ist und in die Gewindeöffnung einschraubbar ist unter Freilassen von Gewindegängen (66) in der Öffnung, in die ein Staubeinsatz (65) über den kopflosen Anschlageinsatz (81) einschraubbar ist.

8. Wasserheizungssystem nach Anspruch 7, bei dem der Staubeinsatz (65) zur Bildung eines Spaltes (85) zwischen dem Staubeinsatz (65) und dem Anschlageinsatz (81) gekürzt ist.

9. Wasserheizungssystem nach einem der Ansprüche 3 bis 8, bei dem der thermostatische Ventilregler einen Gefäßtemperatursensor (37;138), der die Temperatur des vermischten Vorlaufwassers ermittelt, einen thermostatischen Steuerkopf (36;137), der am Ventil (24;124) festgelegt ist, und ein Kapillarrohr (38;139) umfaßt, was sich von dem Gefäßtemperatursensor zu dem Steuerkopf erstreckt.

## Revendications

1. Système de chauffage central comprenant une source (1) d'eau chaude d'alimentation et un réservoir (21) d'eau de retour plus froide, une conduite d'eau d'alimentation (11) partant de ladite source (1), une conduite d'eau de retour (22, 25) menant audit réservoir (21), au moins un circuit de chauffage (20) dans lequel l'eau s'écoule depuis ladite conduite d'alimentation (11) vers ladite conduite de retour (22, 25), ledit circuit de chauffage (20) requérant de l'eau à une température sensiblement inférieure à la température de ladite eau d'alimentation dans ladite conduite (11) partant de ladite source (1), un moyen pour dévier du flux d'eau de ladite conduite de retour (22) vers ladite conduite d'alimentation (11), grâce auquel ladite eau d'alimentation circulant vers ledit circuit de chauffage (20) est mélangée avec ladite eau de retour, ce qui diminue sa température, ledit moyen de dérivation étant une vanne (24) comportant une entrée d'eau (24a) depuis la conduite d'eau de retour (22), une première sortie d'écoulement d'eau (24b) vers ledit réservoir (21), une seconde sortie d'écoulement d'eau (24c) vers ladite conduite d'eau d'alimentation (11) et un moyen de modulation (36; 40) servant à moduler le flux d'eau de sortie entre lesdites première et deuxième sorties d'écoulement d'eau (24b, 24c), caractérisé en ce que ledit moyen de modulation (36; 40) réagit à la température de ladite eau d'alimentation mélangée et module le flux d'eau de sortie entre lesdites première et deuxième sorties d'écoulement d'eau (24b; 24c) de telle sorte que la température de ladite eau mélangée ne dépasse pas une valeur de température d'eau prédéterminée, ladite vanne de dérivation (24) comportant une tige (31) qui positionne l'obturateur de la vanne, un ressort (35) qui sollicite ladite tige (31) vers la position de vanne de moindre déviation d'écoulement d'eau, et un moyen (81) pour limiter le déplacement de ladite tige de vanne (31) dans ladite direction vers la position de moindre déviation d'écoulement d'eau, grâce auquel ladite tige de vanne (31) ne puisse être amenée dans une position de déviation d'écoulement d'eau nulle.

2. Système de chauffage central suivant la revendication 1, dans lequel :
(a) ledit moyen réagissant à la température de ladite eau d'alimentation mélangée pour commander ledit moyen de modulation de vanne (36) est un régulateur thermostatique (36) comprenant un capteur de température à tube capillaire (37) et un actionneur thermostatique (36);
(b) ledit capteur de température à tube capillaire (37) est fixé à ladite conduite d'eau d'alimentation (11) qui achemine l'eau d'alimentation mélangée, et
(c) ledit régulateur thermostatique (36) commande ledit moyen de modulation de vanne (31, 32, 33, 34, 35).

3. Système de chauffage central suivant la revendication 1 ou 2, dans lequel :
(a) ledit ressort de vanne (35) est logé dans un boîtier (56);
(b) une ouverture est prévue dans ledit boîtier (56; 127) afin de permettre l'accès audit ressort (35), et
(c) ledit moyen servant à limiter le déplacement de ladite tige de vanne (31) dans ladite direction vers la position de vanne de moindre déviation d'écoulement d'eau comprend un bouchon d'arrêt (81) qui s'ajuste dans ladite ouverture dudit boîtier et procure un bloc mécanique (82) qui limite le déplacement de ladite tige de vanne (31) dans ladite direction vers la position du robinet de moindre déviation d'écoulement d'eau.

4. Système de chauffage central suivant la revendication 3, dans lequel ledit bloc mécanique est une saillie (82) dudit bouchon d'arrêt (81).

5. Système de chauffage central suivant la revendication 3, dans lequel ledit bloc mécanique comprend des rondelles d'espacement (86) introduites dans ladite ouverture avant ledit obturateur (81).

6. Système de chauffage central suivant l'une quelconque des revendications 3 à 5, dans lequel ladite ouverture dans ledit boîtier (56; 127) est taraudée, ledit bouchon d'arrêt (81) comporte des filets correspondants et ledit bouchon d'arrêt (81) est vissé dans ladite ouverture.

7. Système de chauffage central suivant l'une quelconque des revendications 3 à 6, dans lequel ledit bouchon d'arrêt (81) est sans tête de sorte qu'il peut être vissé dans ladite ouverture taraudée, permettant aux filets de l'ouverture (66) de recevoir le filetage d'un capuchon antipoussières (65) dans ladite ouverture au-dessus dudit bouchon d'arrêt sans tête (81).

8. Système de chauffage central suivant la revendication 7, dans lequel ledit capuchon antipoussières (65) est raccourci de manière à ménager un espace (85) entre le capuchon antipoussières (65) et le bouchon d'arrêt (81).

9. Système de chauffage central suivant l'une quelconque des revendications 3 à 8, dans lequel ledit régulateur de vanne thermostatique comprend un capteur de température à bulbe (37; 138) détectant ladite température de l'eau d'alimentation mélangée une tête de régulateur thermostatique (36; 137) fixée à ladite vanne (24; 124) et un tube capillaire (38; 139) allant dudit bulbe à ladite tête du régulateur.
